(19) Europäisches Patentamt

European Patent Office

Office européen des brevets

(11) **EP 4 730 143 A1**

(12) **EUROPEAN PATENT APPLICATION**

(43) Date of publication:
**22.04.2026 Bulletin 2026/17**

(21) Application number: **24315477.0**

(22) Date of filing: **16.10.2024**

(51) International Patent Classification (IPC):
*G06F 12/0893* (2016.01)

(52) Cooperative Patent Classification (CPC):
**G06F 12/0893;** G06F 2212/502; G06F 2212/601

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Amadeus S.A.S.**
**06410 Biot (FR)**

(72) Inventors:
• **Lopes de Souza, Victor Fernando**
**06410 Biot (FR)**

• **Badaro, Gilbert**
**06410 Biot (FR)**
• **Ronse, Henri**
**06410 Biot (FR)**
• **Blaya, Christophe**
**06410 Biot (FR)**
• **Brayard, Nicolas**
**06410 Biot (FR)**

(74) Representative: **Samson & Partner Patentanwälte mbB**
**Widenmayerstraße 6**
**80538 München (DE)**

(54) **CONTROLLING AN UPDATE STRATEGY OF A CACHE**

(57) A computerized method, system and computer program of controlling an update strategy of a cache are provided. A plurality of cache updating models applied on data entries of a test cache is analysed, wherein outdating probabilities of data entries of the test cache correspond to outdating probabilities of data entries of the cache. Analysing the plurality of cache updating models thereby comprises determining a value of an evaluation metric for a cache updating model of the plurality of cache updating models, wherein the evaluation metric is based on a target accuracy configurable by a user. Moreover, a cache updating model is selected based on the value of the evaluation metric of the cache updating model and the cache updating model is then applied on the cache.

Fig. 1

**Description**

**FIELD**

The present disclosure relates to methods and systems for caching data entries, in particular, for controlling an update strategy of a cache.

**BACKGROUND**

Caching is an important task in almost all computing systems in order to achieve efficient storage and data retrieval. A cache is a high-speed data storage layer that temporarily stores frequently used data, allowing for faster access to that data. It is useful because it reduces the time needed to access data by reducing the need to access the underlying primary and original but significantly slower storage layer. In a distributed system, a distributed cache can span multiple servers, allowing it to grow in size and transactional capacity. This is especially useful in environments with high data volume and load, as it allows for incremental expansion and improved system performance by reducing the load on the database(s) keeping the original data.

Usually, cached data entries are updated periodically by a crawling process or directly, i.e., on-demand, if needed. In any case, it is important to determine whether the cached data is up-to-date or not. This is already not a trivial task. Ideally, the data in the cache should be always up-to-date and the data requested should be always retrieved from the cache in an efficient manner. However, refreshing the cache entries too frequently endures additional costs and computational resources and produces useless traffic when requesting data from the original sources, i.e., providers of the data. Therefore, it is always a trade-off between accuracy of the cache and update frequency but with an optimized update strategy for a cache, this trade-off can be minimized.

In sum, although the general concept of a cache is well-known in the art, each time, when a cache is implemented or when the data to be cached changes, the question arises, which update strategy should be applied to the cache. Depending on a required accuracy, on available processing resource, on characteristics of the data to be cached, and the like, different update strategies can be sensible and most suitable for application to the cache.

Hence, there is a need for an improved method and system for controlling an update strategy of a cache.

**SUMMARY**

In this context, a method of controlling an update strategy of a cache is presented. The method comprises analysing a plurality of cache updating models applied on data entries of a test cache, wherein outdating probabilities of data entries of the test cache correspond to outdating probabilities of data entries of the cache. Analysing the plurality of cache updating models comprises determining a value of an evaluation metric for a cache updating model of the plurality of cache updating models, wherein the evaluation metric is based on a target accuracy configurable by a user. The method further comprises selecting a cache updating model based on the value of the evaluation metric of the cache updating model and applying the cache updating model on the cache.

In some embodiments, the evaluation metric is further based on an achieved accuracy in the test cache and on a number of refreshed data entries in view of the target accuracy after applying a cache updating model of the plurality of cache updating models. In some further embodiments, the evaluation metric is defined by

$$V_{\beta,T}(\hat{p}) = (1 - |\beta|) \max[\min[V_T(\hat{p}), 1], 0] + \max\left[\beta\epsilon_T(\hat{p}), -\beta\delta_T(\hat{p})\right]$$

with

$$\hat{p} = \begin{bmatrix} \hat{P}_1 \\ \hat{P}_2 \end{bmatrix},$$

$$V_T(\hat{p}) = 1 - \frac{Tp_0 - p_0\hat{P}_1 + p_0 + \hat{P}_1 - \hat{P}_2}{p_0(T - p_0)},$$

$$\epsilon_T(\hat{p}) = 1 - \max\left(0, \frac{T - \hat{P}_2}{T - p_0}\right),$$

$$\delta_T(\hat{p}) = 1 - \max\left(0, \frac{\hat{P}_1 - T + p_0}{1 - T + p_0}\right),$$

$$\beta \in [-1,1],$$

wherein T is the target accuracy, wherein $\hat{P}$ is a result generated by cache updating model $\hat{p}$ and $\hat{P}_1$ represents a proportion of refreshed entries by model $\hat{p}$ in a considered cache, $\hat{P}_2$ a proportion of correctness in the considered cache after refreshing by cache updating model $\hat{p}$, and $p_0$ a proportion of correctness in the considered cache before refreshing by cache updating model $\hat{p}$, wherein $\varepsilon_T$ reflects a missing-correctness rate in the considered cache after refreshing by cache updating model $\hat{p}$ and $\delta_T(\hat{p})$ an over-refreshing rate in the considered cache after refreshing by cache updating model $\hat{p}$. In some related embodiments, $\beta$ is a parameter selectable by a user to control whether correctness rate or refreshing rate is more important when updating the cache.

In some embodiments, selecting the cache updating model comprises selecting the cache updating model of the plurality of cache updating models that requires a minimum number of refreshed data entries for achieving the target accuracy.

In some embodiments, the method further comprises optimizing at least a part of the plurality of cache updating models based on the evaluation metric. In yet further embodiments, optimizing at least a part of the plurality of cache updating models comprises applying a genetic search for optimizing hyperparameters of a respective cache updating model in view of a corresponding value of the evaluation metric. In yet further embodiments, optimizing at least a part of the plurality of cache updating models comprises training a neural network cache updating model to optimize a value of the evaluation metric.

In some embodiments, the selected cache updating model is applied to the cache in response to that the difference between the target accuracy and a predicted proportion of correctness in the cache is above a threshold. In some further embodiments, the selected cache updating model is applied if computational resources are sufficient for retrieving updated data entries for the cache.

In some embodiments, the method is executed in response to a trigger to re-evaluate and select a cache updating model for the cache. In some further embodiments, the trigger is generated by a user via a graphics user interface and wherein the selection of the cache updating model is supported by the graphics user interface. In yet further embodiments, the trigger is generated automatically based on at least one of the evaluation metric, an accuracy of the prediction of the cache update model currently applied, computational costs for executing the method, and a time since last execution of the method.

Another aspect of the subject disclosure provides a computing system of controlling an update strategy of a cache, wherein the computing system is configured to execute the methods as described herein. Yet another aspect of the subject disclosure provides a computer program comprising instructions which, when the program is executed by a computer, cause the computer to carry out the methods as described herein.

The foregoing paragraphs have been provided by way of general introduction and are not intended to limit the scope of the following claims. The described embodiments, together with further advantages, will be best understood by reference to the following detailed description taken in conjunction with the accompanying drawings.

## BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:

Fig. 1 is a high-level schematic overview on a system according to the disclosure.

Fig. 2 is a flow chart of a basic method according to the disclosure.

Fig. 3A shows the application of a selected cache updating model in live updates.

Fig. 3B shows the application of a selected cache updating model in background updates.

Fig. 4 illustrates the geometric problem underlying the herein presented solution.

Fig. 5 pertains to a further refinement of a selection of the cache updating model.

Fig. 6 is a flow chart according to another embodiment of the disclosure.

Fig. 7 is diagrammatic representation of a computing system, which may implement all or part of the functionalities described herein.

**DETAILED DESCRIPTION**

The present disclosure relates to methods and systems of controlling an update strategy of a cache. Caching data entries serves the purpose of providing shorter response time to data requests. However, cached data entries may become stale and outdated when time goes by. Therefore, every cache needs a suitable update strategy, which depends on several aspects of the cache, the underlying computing system, characteristics of the data to be cached, and the like.

In the past decades, a huge number of different update strategies have been developed to achieve the highest overall accuracy of the considered cache with lowest number of refreshed data entries. The optimal cache updating strategy would be to only refresh those data entries that are outdated, a random cache updating strategy would just pick a random number of data entries an update those. The latter one is not really suitable for application to a cache or would need a high number of randomly selected data entries to ensure a specific overall accuracy of the cache. The optimal cache updating strategy is barely achievable or only by cross checking all data entries in the cache with original data, which raises the needed computational resources to a far extent and, thus, outweighs the advantages of caching.

Kinds of models for cache updating, i.e., cache updating models, can be classified into two main groups, namely, knowledge-based models and behavioural models. There exist some further classes of models, which are of less importance but the herein described solution can also be applied when considering those models as well.

Knowledge-based models are approaches that heavily emphasize the use of explicit knowledge representation, rules, facts, and logical reasoning to solve the underlying caching problem. That is, these models are based on a priori knowledge base or knowledge assumptions of the cached data, which is used to make inferences and draw conclusions. Knowledge is often heuristic in such approaches. That is, each model it is not based on a formal knowledge framework, but on an equation that models the accuracy behaviour of the considered cache.

For example, it can be assumed that the probability of accuracy of a data entry depends on the data age. This dependency may be linear or quadratic or according to any other equation, e.g., third-degree, multi-polynomial etc. In some models, the dependency is also according to other models, such as a Gaussian model, an exponential decay model, a log-logistic model, and the like. The model of the accuracy may also consider other parameters, such as a lead time, i.e., a time until an event with respect to the data, computational costs, outside parameters, and the like.

Behavioural models, on the other hand, are artificial intelligence approaches that prioritize learning from data and simulating behaviour based on observed patterns. These models do not rely on explicit knowledge representation and logical rules. Instead, they utilize statistical techniques and machine learning algorithms to learn patterns and behaviours from data, enabling them to imitate or predict behaviours without needing predefined knowledge structures. Behavioural models are often more adaptable across various domains and tasks, as they can learn and generalize from diverse datasets, making them versatile in handling different problems. However, they may lack the explainability associated with knowledge-based models, as their decision-making process is driven by learned patterns rather than explicit rules. They may also require large amounts of data to learn effectively and can be way more computationally expensive (as normally having way more parameters) than knowledge-based models.

Some behavioural models for caching are based on neural networks. Neural networks are a fundamental concept in modern machine learning and artificial intelligence, inspired by the functioning of the human brain's neural structure. These architectures have proven to be powerful tools for a wide range of tasks, frequently being referred as state of the art in many applications, from image and speech recognition to language processing and decision-making. A neural network can be defined as a computational model composed of interconnected nodes, commonly referred to as neurons or units. These units are organized in layers, each contributing to the network's ability to learn and generalize patterns from input data. We can distinguish three types of layers in a neural network: The input layer receives the initial data, where each node represents a feature or attribute of the input. Intermediate layers, known as hidden layers, process the input using weighted connections and activation functions, allowing the network to capture complex relationships within the data. The output layer provides the network's prediction or output based on the learned patterns from the input data.

Neural networks learn from data by adjusting the weights and biases through a process called backpropagation. This involves minimizing a chosen loss function, which quantifies the difference between the predicted and actual outputs. An optimizer chosen for this task is often the Adam optimizer, which is an extension of the stochastic gradient descent method. The Adam optimizer computes adaptive learning rates for each parameter, allowing for faster convergence and better performance.

Support Vector Regression (SVR) is also a popular machine learning algorithm that can be used for caching tasks. It is an extension of the Support Vector Machine (SVM) algorithm, which is primarily used for classification tasks. SVR is effective in modelling and predicting continuous variables, making it a valuable tool in various domains, including finance, medicine, and engineering. The main objective of SVR is to find a hyperplane that best fits the data while maximizing the margin around it. This hyperplane is defined by support vectors, which are the data points closest to the hyperplane and influence its position and orientation. In SVR, the goal is to ensure that the errors made on the data points are within a predefined tolerance or epsilon.

The choice of kernel function, such as linear, polynomial, or radial basis function (RBF), significantly impacts the SVR's performance and ability to model complex relationships in the data. SVR involves solving a constrained optimization problem to find the optimal hyperplane while minimizing the margin violations and ensuring the errors are within the specified tolerance. This optimization problem can be formulated using Lagrange multipliers and dual optimization. The regularization parameter C in SVR controls the trade-off between maximizing the margin and minimizing the errors, preventing overfitting. Higher values of C lead to a narrower margin and potentially overfitting to the training data. Tuning the hyperparameters, including the choice of kernel and C, is crucial for achieving optimal SVR performance. Common approaches for hyperparameter tuning include grid search and cross-validation.

Lasso (Least Absolute Shrinkage and Selection Operator) regression is a widely used machine learning technique for linear regression and feature selection, which is also suitable for caching strategies. It is particularly useful when dealing with high-dimensional datasets and aims to select a sparse set of relevant features while regularizing the model. The Lasso algorithm seeks to find an optimal set of model parameters that minimize a cost function. It encourages sparsity by driving many feature weights to zero, effectively eliminating irrelevant features. Lasso regression is particularly effective for feature selection, as it can shrink the coefficients of less important features to zero. This helps in building simpler and more interpretable models. Lasso regression has found applications in various fields, including genetics, economics, and signal processing.

Another behavioural model is Ridge regression, also known as Tikhonov regularization, which is a popular linear regression technique used to address the issue of multicollinearity and overfitting in linear regression models. It extends ordinary least squares (OLS) regression by adding a regularization term that penalizes the model for large coefficient values. The Ridge algorithm seeks to find an optimal set of model parameters that minimize a cost function. The Ridge algorithm penalizes large weights, promoting a balance between fitting the training data and keeping the weights small. Ridge regression is valuable for handling multicollinearity and stabilizing the model, especially when dealing with high-dimensional datasets.

As can be seen, there exist multiple cache updating models with different advantages and disadvantages and not all are likewise suitable for all caching tasks. In addition, all models rely on parameters and can be modified, i.e., adapted to a specific caching task to some extent. Therefore, cache updating models, even of the same group, perform differently on a specific cache architecture and implementation. Since the characteristics of cached data can also change over time, the most suitable cache updating model may also change over time. Moreover, the preferences of handling the trade-off between accuracy and refreshing as explained above may also differ from implementation to implementation. In some cases, it may be more relevant to limit the number of refreshed entries and allowing a lower accuracy whereas, in other cases, the accuracy may be the most critical point to keep an eye on. Hence, there is a need to control the cache updating strategies applied for a cache.

The herein presented solution is based on analysing a plurality of cache updating models with an evaluation metric in order to determine the cache updating model, which is the most suitable cache updating model for the specific cache. The evaluation metric is thereby based on a target accuracy, which is configurable by a user. Hence, the user (e.g. an administrator) has control over how the most suitable model should perform when caching data entries.

Before turning to the description of the embodiments, some definitions and explanations for caching are given in the following. A cache structure consists of columns. Each column has a name and set of admissible values. The class of column names will be denoted by $\mathcal{K}^*$ and the class of admissible values (in the modelling context) by $\mathcal{K}$. A cache line $c$ is a collection of values that correspond, each, to one and only one column. In terms of modelling, a cache sample C is a finite set of cache lines, i.e., a finite set of cached data entries. Each column name $k \in \mathcal{K}^*$ is a function $k(c)$ that selects the respective entry of a cache line $c$. For a set of features $\mathcal{F}$ regarding $\mathcal{K}$ is referred to $\mathcal{F}^*$ analogously.

As already indicated above, there is a trade-off inherent to cache's nature that is related to the frequency of updating the cache. The more often the cache or a number of cache entries is updated, the more accurate the cache is but the more expensive it is to maintain a preferred accuracy - and vice-versa. This can be summarized as follows. If a poll of a cache entry is actually needed, i.e., the cache entry is stale, and the applied update strategy indicates that a poll is needed, this is the required behaviour of the cache and its update strategy. If the applied update strategy, however, indicates that no poll is needed, the data entry becomes inaccurate and the overall cache accuracy deteriorates. In the other case, if a poll of a cache entry is actually not needed, i.e., the cache entry is up-to-date with respect to the original data, and the applied update strategy indicates that a poll is needed, this is a useless call. In contrast, if the applied update strategy indicates that no poll is needed, everything is fine.

One problem envisaged in this disclosure is to find an inexpensive way (in terms of computation resources) to keep the cache accurate. In other words, the correctness of the cache is maximized while the frequency of updates is minimized. There may be different approaches to define the correctness of a cache. One straight forward approach could be to define the accuracy of a line *c* of a cache as how much the line c differs from the same data being fetched directly from the original database. Assuming now that *p(c)* defines the accuracy of a line *c*, $p(C) \triangleq \frac{\sum_{c \in C} p(c)}{|C|}$ defines the accuracy of the whole cache.

To retrieve information from the cache (or a cache sample), Kafka sniffing may be used as a method for the consumption of real-time data. The output of this process may be JSON (JavaScript Object Notation) or a similar format. From this output, a real-time cache sample $C_r$ may be derived. However, working on a real-time cache sample is not very efficient since, e.g., five minutes of sniffing a cache may generate up to 1 GB data. This is not an issue for the cache in production, i.e., a live environment, but for evaluating the models as will be described below. Hence, a test cache may be applied in the embodiments described herein, which may in some embodiments be an aggregated cache, which stores, in an Structured Query Language (SQL) table, statistics corresponding to the whole cache. Regarding two cache lines c and c' in the cache history C, they are equivalent with respect to some $\mathcal{F}^*$, or $c \stackrel{\sim}{\mathcal{F}^*} c'$, if and only if $\forall k \in \mathcal{F}^*$, k(c) = k(c'). Thus, an $\mathcal{F}^*$ -aggregated cache sample $C_a$ is a table, in which each row corresponds to an equivalence class $[x]_{\mathcal{F}^*} \triangleq \{c \in C | x \sim_{\mathcal{F}^*} c\}$ and that has the columns $\mathcal{F}^*$ and an extra column that stores the proportion of correctness $p([x]_{\mathcal{F}^*})$. In other words, every row of an aggregated cache sample refers to all values that are equal under the features $\mathcal{F}^*$. The last column stored the proportion of correctness of them.

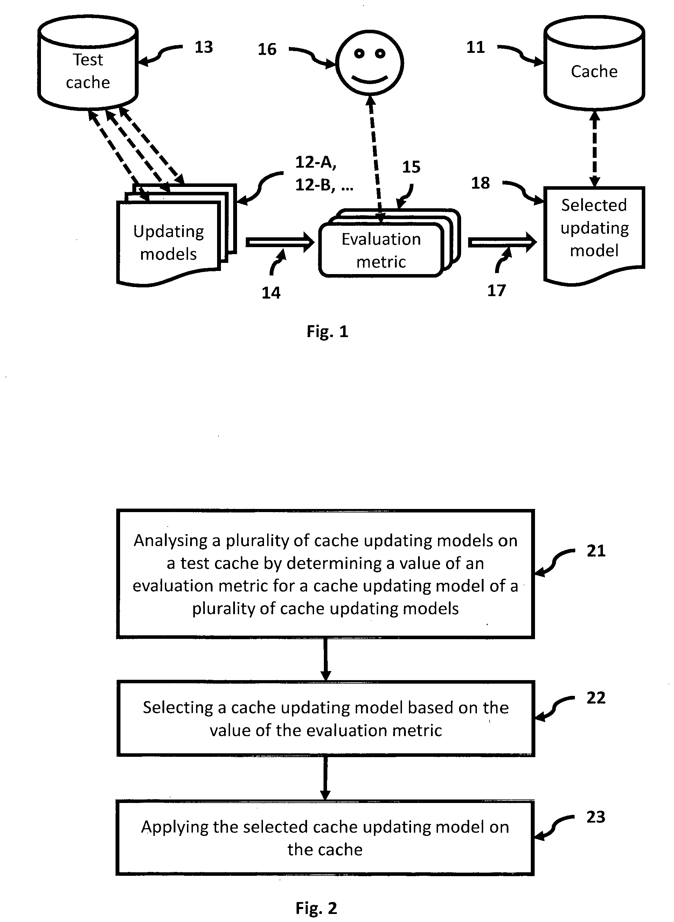

Now turning to Fig. 1, which is a high-level schematic overview on a system for controlling updating strategies applied to a cache 11. It is assumed that there are multiple cache updating model 12-A, 12-B, etc. (also referred uniformly to as 12), which are candidates for being applied to the cache 11. These candidate cache updating models 12 are analysed on a test cache 13, that is not in production or live operation, but used for evaluation and may, at least in some embodiments, be an aggregated cache as explained above. This test cache 13 behaves similar as the cache 11 with respect to its outdating probabilities. The outdating probabilities of data entries of the test cache 13, thus, correspond to outdating probabilities of data entries of the cache 11.

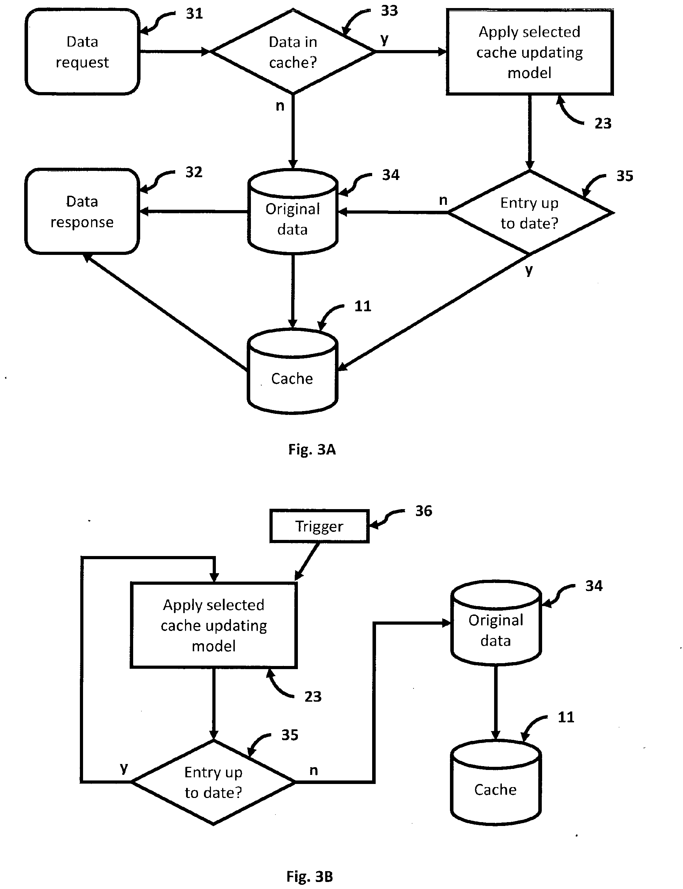

The test cache 13 has a determined and actual starting accuracy of data entries. The candidate cache updating models 12 are applied on the test cache 13 as is shown with the dashed arrows. Such an application of a cache updating model 12 can be done for simulated live updates, i.e., in response to data requests as is depicted and explained for live updates on the cache 11 with respect to Fig. 3A, or in background updates, i.e., an update check handling all data entries as is depicted and explained for the cache 11 with respect to Fig. 3B. The application, i.e., the testing phase is for all updating models the same. For example, a specified number of data requests is simulated or one or more rounds of background updates of the whole cache are executed.

After execution of each considered cache updating model 12, a value of an evaluation metric 15 is determined (arrow 14) for the respective considered cache updating model 12. This evaluation metric 15 is a core aspect of the disclosure described herein. A user 16 can configure one or more parameters of the evaluation metric 15. For example, the evaluation metric 15 may depend on a target accuracy, an achieved accuracy in the test cache 13 and/or on a number of refreshed data entries in the test cache 13. Hence, the user 16 may configure the evaluation metric 15 as needed for application of the cache updating model 12-A, 12-B to the cache 11. For example, in some implementations of the cache 11, a target accuracy of 85% may be sufficient. In other implementations of the cache 11, a target accuracy of 99% may be required. Hence, the user 16 can control, which impacts the value of the evaluation metric 15 given to a specific cache updating model 12. This value then also impacts which cache updating model 12 will be selected (arrow 17) for application on the cache 11. This cache updating model 12 is then referred to as selected cache updating model 18 in this disclosure.

Fig. 2 now is a flow chart of a basic method for controlling the update strategy applied to the cache 11. This method relates to what has been shown in Fig. 1 and starts in box 21 with analysing a plurality of cache updating models 12 applied on data entries of a test cache 13, wherein outdating probabilities of data entries of the test cache 13 correspond to outdating probabilities of data entries of the cache 11. Analysing the plurality of cache updating models 12 comprises determining a value of an evaluation metric 15 for a cache updating model 12 of the plurality of cache updating models 12, wherein the evaluation metric 15 is based on a target accuracy configurable by a user 16.

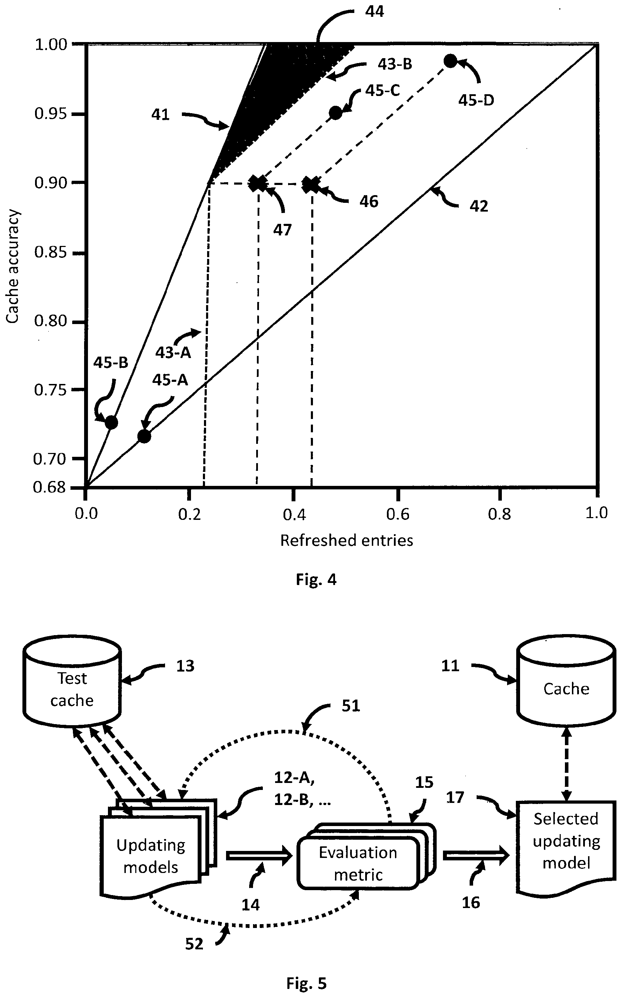

In some embodiments, the evaluation metric 15 may be further based on an achieved accuracy in the test cache and on a number of refreshed data entries in view of the target accuracy after applying a cache updating model 12-A, 12-B of the plurality of cache updating models 12. A specific evaluation metric 15 according to an embodiment of the disclosure is explained later with respect to Fig. 4.

In some further embodiments, at least a part of the plurality of cache updating models 12 is updated based on the evaluation metric 15, which is also highlighted and explained with respect to Fig. 5 below. In some related examples, optimizing at least a part of the plurality of cache updating models 12 comprises applying a genetic search for optimizing hyperparameters of a respective cache updating model 12-A, 12-B in view of a corresponding value of the evaluation metric 15. In some additional or alternative examples, optimizing at least a part of the plurality of cache updating models 12 comprises training a neural network cache updating model 12 to optimize a value of the evaluation metric 15.

The method then proceeds in box 22 with selecting a cache updating model 18 (or the plurality of candidate cache updating models 12) based on the value of the evaluation metric 15 of the cache updating model 18. In some embodiments, the cache updating model 18 of the plurality of cache updating models 12 is selected that requires a minimum number of refreshed data entries for achieving the target accuracy. This may be determined directly from the value of the evaluation metric 15 or calculated based on the evaluation metric 15. This means, it may happen that the selected cache updating model 18 is not always the candidate cache updating model 12 that has the best (e.g., highest or lowest, depending on the applied evaluation metric 15) value of the evaluation metric 15.

Selecting the cache updating model 18 may be done automatically, i.e., based on a threshold or the like. For example, if the evaluation metric 15 for one or more cache updating models 12 is above a threshold, the cache updating model 18 out of the cache updating models 12 is selected that has the highest value of the evaluation metric 15 and/or that needed the lowest number of refreshed entries to achieve the target accuracy. In the alternative, the user 16 (or another user, e.g., another administrator etc.) is presented with a user interface, on which the user 16 is presented with the values of the evaluation metric 15 of the candidate cache updating models 12 (with or without further statistics, such as number of refreshed entries, achieved accuracy, runtime, and the like). The user 16 can then select the model to be applied on the cache 11 via the user interface based on the information presented to him/her.

The method finally proceeds in box 23 with applying the selected cache updating model 18 on the cache 11. This means, the selected cache updating model 18 is then used in production for determining whether one or more entries in the cache 11 are stale and should be updated. Usually, the target accuracy as reflected in the evaluation metric 15 and configured by the user 16 is kept the same in application of the selected cache updating model 18 on the cache 11 since this target accuracy was relevant for selecting the best cache updating model 18 for the cache 11.

The selected cache updating model 18 may be applied to the cache 11 for live data retrievals to determine whether the requested entry in the cache 11 is up-to-date or not (as is shown in Fig. 3A) or at some points in time as background process on all data entries in the cache 11 (as is shown in Fig. 3B). In the latter case, the selected cache updating model 18 may be applied to the cache 11 in response to that the difference between the (configured) target accuracy and a predicted proportion of correctness in the cache 11 is above a threshold. For example, if the threshold is set to 5%, the target accuracy is configured to be 90%, and the predicted current accuracy (i.e., proportion of correctness in the cache 11) is 84%, the selected cache updating model 18 is applied to the cache 11 since the difference (6%) is above the threshold (5%). The system may also work the other way around, namely, that the threshold ensures that the current accuracy is kept above the target accuracy. In this case, the threshold may, e.g., be -5%, and the selected cache updating model 18 may be applied already when the current accuracy is predicted to be less than 95%, e.g., 94% (which results in a difference of -4%, which is above the threshold of -5%). The prediction of the current accuracy may be done by the selected cache updating model 18 or by any other suitable prediction method, e.g., with a knowledge-based approach as described above.

In some further (additional or alternative) embodiments, the selected cache updating model 18 is applied if computational resources are sufficient for retrieving updated data entries for the cache 11. Hence, if there are currently too many data requests, which occupy the computational resources of the caching system, the application of the selected cache updating model 18 may be skipped or postponed although, e.g., the target accuracy is currently not achieved or the difference of the target accuracy to the current accuracy is above a threshold as explained above.

Generally, the method of Fig. 2 may be applied in response to a trigger to re-evaluate and select a cache updating model 18 for the cache 11. Hence, the method may not be only done once when the cache 11 is implemented for the first time but may be executed during lifetime of the cache 11 multiple times if, e.g., characteristics of the cache 11, its data entries, computational resource, etc. change. In some embodiments, the trigger may be generated by a user (e.g., user 16) via a graphics user interface, which may be the same on which the user 16 can configure the target accuracy and/or select the cache updating model 18 in some embodiments.

In some additional or alternative embodiments, the trigger may be generated automatically based on at least one of the evaluation metric 15, an accuracy of the prediction of the cache update model currently applied, computational costs for executing the method, and a time since last execution of the method. The application of the herein described methods may generally be supported by a computing system of controlling the update strategy of the cache 11, which may be distributed or one single computing system as known in the art. Moreover, the method may be implemented by a computer program comprising instructions which, when the program is executed by a computer, cause the computer to execute the methods as described herein.

Fig. 3A shows the application of the selected cache updating model 18 in live updates, i.e., in response to a data request 31. The data request 31 may be transmitted from an external entity and would - without providing the cache 11 - require fetching the requested data from the original database 34 (or other storage/memory). In the herein considered caching structure, the system determines (diamond 33) whether the requested data is in the cache 11 or not. If not (no-branch of diamond 33), the requested data is retrieved from the original database 34 and provided in the data response 32. The system may be configured to also store the retrieved data in the cache 11 such that the data is present in the cache 11 if a similar data request is transmitted from another entity.

If the data for the data request 31 is already present in the cache 11 (yes-branch from diamond 33), the selected cache updating model 18 is applied (as is shown with box 23), which means that it is determined whether the data entry in the cache 11 is up-to-date or not (diamond 35). If the entry is determined by the selected cache updating model 18 to be not up-to-date (no-branch of diamond 35), the requested data is retrieved from the original database 34 and provided in the data response 32. The system may be configured to also replace the retrieved data with the outdated data in the cache 11. In the alternative (yes-branch of diamond 35), the requested data is retrieved from the cache 11 and provided in the data response 32.

Fig. 3B shows the application of a selected cache updating model 18 in background updates. In response to a trigger 36, which may, e.g., be a periodic trigger or a trigger depending on the current estimates accuracy as described above and may in some embodiments also consider available computational resources, the selected cache updating model 18 may be applied (box 23) on all (or at least a large part of the) data entries in the cache 11. For a data entry, it is then determined whether or not the entry is up-to-date (diamond 35). If it is determined (estimated) to be up-to-date by the selected cache updating model 18 (yes-branch of diamond 35), it is proceeded to the next data entry in the cache. If not (no-branch of diamond 35), the data entry is retrieved from the original database 34 and stored in the cache 11, replacing the outdated data entry.

Fig. 4 illustrates the geometric problem underlying the herein presented solution. As was already indicated above, caching is also a trade-off between cache accuracy (y-axis) and refreshed data entries (x-axis). Generally, not all cache updating models are equally suitable for all caches. Therefore, it is not directly apparent which cache updating models are the most promising for a specific cache or specific required characteristics of the cache. Also, as there are plenty of parameters and hyperparameters in cache updating models, it is even not apparent from the outset which combination of hyperparameters is the best when having a specific cache with specific requirements (e.g., target accuracy, number of refreshed entries, computational resources available and the like).

In order to find the best, e.g., more suitable cache updating model and/or the most suitable combination of hyperparameters for a cache updating model such that specific requirements are fulfilled, an objective way of classifying the cache updating models is needed. The solution presented herein therefore uses the evaluation metric already mentioned above. Before defining the geometric approach, some further definitions are given.

A cache updating model (in particular, those behavioural approaches as described above) can be considered to follow a binary classification. The inputs for a model, also called features $\mathcal{F}$, are composed from a subclass of the cache columns admissible values and/or deterministic functions of them. That is, for some suitable function $f$ holds $\forall \bar{\mathcal{F}} \in 2^{\mathcal{K}}, \mathcal{F} \triangleq \bar{\mathcal{F}} \cup f(\mathcal{K})$. Given a cache sample C and some features $\mathcal{F}$, $\forall c \in C$, let $y(c) \triangleq p(c)$ be the label and some $x \in F$ be the input. A Binary Classification Model is given by a prediction function $\hat{y}$ (that tries to approach in some sense accuracy y) such that, $\forall x \in \mathcal{F}$, $\hat{y}(x) \in \{0,1\}$. This simple formulation, however, has a strategic limitation that motivates the search of a more general formulation. A fixed binary classification like this would always try to achieve the highest possible correctness considering some actuation cost. This is an overly rigid behaviour. In contrast, it may be required to define a desired target correctness or accuracy of the cache and adapt models thereto.

The alternative formulation thus relies on considering a cache updating model to be a regression problem. This formulation is similar to the binary classification but with output in [0,1], referring to the probability of correctness of a given cache line. In more precise terms, the correctness of each cache entry assumed to be drawn from a given Bernoulli distribution with probability p that depends only on $\mathcal{F}$. The best model therefore seems to be a Regression Model given by a prediction function $\hat{p}: \mathcal{F} \to [0, 1]$. This formulation, given a Target Correctness $T \in [0,1]$, can be reduced to

$$\hat{y}_{\hat{p},T}(c) = \begin{cases} 1, & \hat{p}(x) > T \\ 0, & \hat{p}(x) \leq T \end{cases},$$

which is again a binary classification problem.

It is also useful, before effective execution, to fix some preliminary indicators that allow measuring the effect of a model in a given real-time cache sample. Let $\hat{p}: \mathcal{F} \to [0,1]$ be some (regression) cache updating model and $T \in [0,1]$ be a target correctness. For a fixed real-time cache sample $C_r$, $R_{\hat{p},t} = \{c: c \in C_r, \hat{p}(x) < T\}$ corresponds to the refreshed entries and $r_{\hat{p},T} = \frac{|R_{\hat{p},T}|}{|C_r|}$ to the proportion of refreshed entries in the cache. Also, $\forall (x, y) = c \in C_r$ the refreshed cache is denoted as

$$y_{\hat{p},T}^*(c) = \begin{cases} y, & \hat{p}(x) > T \\ 1, & \hat{p}(x) \leq T \end{cases},$$

and

$$\bar{p}_{\hat{p},T} = \frac{|\{y_{\hat{p},T}^*(c) : c \in C_r\}|}{|C_r|}$$

is the proportion of correctness after refreshing. If such a model is perfect (in terms of accuracy and recall of $\hat{y}_{\hat{p},T}$), it is expected that $\bar{p}_{\hat{p},T} \geq T$ holds.

One difficulty of evaluating cache updating models is that particularly machine learning based models, e.g., regression-based approaches as explained, provide an output, which is a probability, whereas the individual cache line correctness is a realization of this probability (0 or 1). Therefore, the usual metrics for regression problems are not suitable for evaluating such models. A first option could be to consider, for each model and for each target correctness, an associated binary classification model. Then, an F-Score (or any cost function based on accuracy and recall) may be applied to compare the models. However, this approach has some disadvantages, namely, when varying the target correctness, the prevalence of the positive class changes. This would result in a comparison of models in different contexts. In particular, a model that always meet the desired target accuracy would be penalized by the F-Score if the target is not near 1. A model that constantly update more entries than necessary would be rewarded. This does not translate precisely the trade-off of a caching scenario.

Therefore, a different score is proposed with a geometric approach shown in Fig. 4. In the context of a fixed real-time cache sample $C$ with correctness $p_0 \in (0,1)$, let $\mathcal{F}$ be features of the model and $T \in (p_0, 1]$ a target correctness. A Target Model is a cache updating model $\hat{p}_T^*$ such that $\bar{p}_{\hat{p}_T^*,T} = T$ and $r_{\hat{p}_T^*,T} = T - p_0$. In particular, it is the most efficient result that achieves the target, by having 0 false positives. For some $r \in [0,1]$, the Random Model is a model $\hat{p}_T^o : \mathcal{F} \to [0,1]$ that refreshes a proportion r of the cache randomly (e.g., according to Bernoulli distribution) chosen. That is, $\forall x \in \mathcal{F}$, $\hat{p}_T^o(x) \sim Bern(r)$. The expectancies are $\mathbb{E}[r_{\hat{p}_T^*,T}] = r$ and $\mathbb{E}[\bar{p}_{\hat{p}_T^*,T}] = p_0 + r(1 - p_0)$. Two interesting examples of further random models are the extremes $\hat{p}_0^o$ (which we can call No-Action Model) and $\hat{p}_1^o$ (which we can call No-Cache Model). The no-action model is no model at all. The accuracy of the cache will remain the same, and there will be no actuation cost. The no-cache model makes the cache useless by requesting the provider for each entry:

In Fig. 4, some aspects of the trade-off are illustrated. The line 41 depicts the best possible results (target model) for each possible target T. The region left therefrom is impossible to achieve. The line 41 depicts the expectancy of all possible random models, i.e., if simply a random number of entries are refreshed, the model would provide a result (in terms of accuracy and refreshed entries) lying on this line on the long run.

An interesting remark is that the line 41 represents the Pareto frontier. That is, the line 41 represents a (theoretical) set of models that are not dominated by any other model. In this case, a model $\hat{p}$ dominates another model $\hat{p}$ if, and only if, $r_{\hat{p},T} \leq r_{\hat{p}',T}$ and $\bar{p}_{\hat{p},T} \geq \bar{p}_{\hat{p},T}$. In a context of fixed T, for any model $\hat{p}$, a point $\hat{P}$ is denoted as

$$\hat{P} \triangleq \begin{bmatrix} \hat{P}_1 \\ \hat{P}_2 \end{bmatrix} \triangleq \begin{bmatrix} r_{\hat{p},T} \\ \bar{p}_{\hat{p},T} \end{bmatrix} \in \mathbb{R}^2.$$

Given two points (results after refreshing) $\hat{P}'$ and $\hat{P}'$, they are $\lambda_T$-easily comparable if, and only if, $\exists \lambda_T \in \mathbb{R}$ such that $\lambda_T(\hat{P}' - \hat{P}_T^*) + \hat{P}_T^* = \hat{P}''$. There exists a line on the plane that connects $\hat{P}'$, $\hat{P}_T^*$, and $\hat{P}''$. A first good heuristic would be assuming that a model closer to the target model and line 41. This idea could even be refined. As $p_0 > 0$ and every two different non-parallel lines intersect exactly once the plane, there must exist a point $\xi$ for all models at the extension of the random models' expectancy line such they are easily comparable.

That is, for almost every model $\hat{p}, \exists! \, \xi = (\xi_1, \xi_2) \in \mathbb{R}^2$ such that $\exists! \, \lambda_T^\xi \in \mathbb{R}$ such that

$$\lambda_T^\xi \left( \hat{P}' - \hat{P}_T^* \right) + \hat{P}_T^* = \xi$$

and

$$\xi_2 = p_0 + \xi_1 (1 - p_0).$$

From this, one can deduce

$$\lambda_T^\xi = \frac{p_0(T - p_0)}{Tp_0 - p_0^2 - p_0 \hat{P}_1 + p_0 + \hat{P}_1 - \hat{P}_2}.$$

This results in the definition of the **pure V-Score** of the model $\hat{p}$ for a target $T$

$$V_T(\hat{p}) \triangleq \frac{Tp_0 - p_0^2 - p_0 \hat{P}_1 + p_0 + \hat{P}_1 - \hat{P}_2}{p_0(T - p_0)}.$$

It is noted that $V_T(\hat{p}_T^*) = 1$ and $\forall r \in [0, 1], V_T(\hat{p}_0^r) = 0$. The pure V-Score is an affine function that measures, in some sense, how good is the model, returning 0 if it is purely random and a higher value if it approaches the target. In terms of Pareto equilibria, the pure V-Score is increasing with the target. An aspect of this score is that it makes the comparison between the outputs for different target accuracy viable, as the score of the target model (i.e., line 41) is always 1.

When considering Fig. 4 in view of the pure V-Score, the area below line 42 represents points with a negative pure V-Score, which can be called inadequate models. Another interesting line is the small dashed line 43, with two parts 43-A and 43-B. In the example of Fig. 4, the current accuracy of the cache $p_0$ is 68%. The target accuracy is assumed to be 90%. The line 43-A illustrates a well-known fact, namely, that - if the model could identify all stale entries in the cache - 22% of the entries must be updated to have 90% accuracy (68+22=90). Line 43-B is then in parallel to line 42. A model lying between line 41 and line 43-B would have a pure V-Score above 1. They can be called T-great models. Although these models perform slightly less perfect than the (theoretical) target model (line 41), they can be considered at least as or equally good because they also achieve the target accuracy but with an acceptable small over-refreshing rate.

In Fig. 4, several other aspects are also highlighted. Consider cache updating models 45-A, 45-B, 45-C, and 45-D, which have achieved the indicated results. Hence, neither model 45-A or 45-B have achieved the target accuracy. Hence, although model 45-B lies on the target model line 41, it is not suitable for application on the cache 11 if a target accuracy of 90% must be achieved. Model 45-A is not more than a random model.

Both models 45-C and 45-D have achieved a higher accuracy than the target accuracy. Although model 45-D achieves a higher accuracy, it has a lower pure V-Score than model 45-C since the estimated over-refreshing rate is higher with model 45-D. This is highlighted with crosses 46 and 47. It can be assumed that model 45-D would need to refresh about 42% of the entries to achieve an accuracy of 90% and model 45-C would need to refresh about 32% of the entries to achieve the same accuracy - if the models are further optimised in view of the configured and desired target accuracy, which is explained with respect to Fig. 5.

Optionally, the pure V-Score can be further improved if more flexibility is required. A parameter capable of balancing priorities that should be given to the outcomes can be introduced. A missing correctness rate of the model for a target T can be defined as:

$$\epsilon_T(\hat{p}) = 1 - \max\left(0, \frac{T - \hat{P}_2}{T - p_0}\right).$$

Similarly, an over-refreshing rate of the model for a target T can be defined as:

$$\delta_T(\hat{p}) = 1 - \max\left(0, \frac{\hat{P}_1 - T + p_0}{1 - T + p_0}\right).$$

Then, an enhance V-Score, $V_\beta$-Score, can be defined as:

$$V_{\beta,T}(\hat{p}) = (1 - |\beta|) \max[\min[V_T(\hat{p}), 1], 0] + \max[\beta\epsilon_T(\hat{p}), -\beta\delta_T(\hat{p})].$$

If $\beta = 0$, the $V_\beta$-Score equals the pure V-Score defined above (but saturated in 0 and 1). If $\beta > 0$, the missing correctness is more important than the over-refreshing rate when evaluating the cache updating models 12 and select the best cache updating model 18. In this case, the following holds: $V_{\beta,T}(\hat{p}_0^o) = |\beta|$. If $\beta < 0$, missing correctness is less important than the over-refreshing rate when evaluating the cache updating models 12 and select the best cache updating model 18. In this case, the following holds: $V_{\beta,T}(\hat{p}_1^o) = |\beta|$. In any case, the following applies: $V_{\beta,T}(\hat{p}) \in [0,1]$ and $V_{\beta,T}(\hat{p}_T^*) = 1$.

The application of the $V_\beta$-Score may in the case of $\beta = 1$ lead to the model 45-D being chosen instead of model 45-C. In case of $\beta = -1$, the model 45-B may even be chosen. There may even exist scenarios, in which model 45-A is the most promising one depending on target accuracy and preferences with respect to $\beta$. Hence, the user 16 has full control over the cache updating strategy.

Fig. 5 pertains to a further refinement of a selection and evaluation of the cache updating model. The processes are similar to that of Fig. 1 besides that the evaluation metric 15 is not only determined for the candidate cache updating models 12 but is also used, at least for some of the cache updating models 12, for optimizing the parameters of the models to achieve the desired accuracy and/or refreshing rates. This is depicted with small dashed arrows 51 and 52. In some embodiments, the method without optimization may be performed once to determine a set of models that look promising for the task according to their initial evaluation metric 15 and then train or adapt the models based on the evaluation metric 15.

In some embodiments, optimizing at least a part of the plurality of cache updating models may comprise applying a genetic search for optimizing hyperparameters of at least one of the candidate cache updating models 12 in view of a corresponding value of the evaluation metric 15. A genetic search algorithm is a metaheuristic inspired by the process of natural selection. It starts with a population of random individuals (or models), and then, in each generation, it creates new individuals taking advantage of randomness and by combining the parameters of the better ones. The new individuals are then added to the population, and the process is repeated iteratively until a stopping criterion is met. The parameter space of the genetic search is a combination of all possible hyperparameters. The target is to find the set of hyperparameters that optimize the evaluation metric 15, e.g., maximize the V-Score (pure or $\beta$):

Some further aspects could also be considered. The cache updating models 12 may also be trained the test cache 13. The test cache 13 may be an aggregated cache but can also be a locally aggregated cache, which is an aggregated cache sample that does not correspond to all the of the available cache history but only to a recent subset of it. The locally aggregated cache can thus be much smaller than an aggregated cache reflecting and copying the behaviour of the same cache 11. Depending on the models trained and also tested/evaluated on the test cache 13, it can be advantageous to rely on one or the other. For example, knowledge-based models perform better on a locally aggregated cache, whereas behavioural models perform better on a fully aggregated cache. This observation may also be taken as motivation to train the cache updating models 12 on a non-aggregated cache sample as test cache 13.

In training of behavioural models that are based on machine learning techniques, such as neural networks, the V-Score (pure or $\beta$) may also be considered in the optimization loop, i.e., at least some cache updating models 12 are trained to optimize a value of the evaluation metric 15, which is - in some examples - the herein described V-Score. The V-Score is, in contrast to many other evaluation metrics 15, however, constant in large parts of the output space. Since many optimizers of neural networks are based on gradient descent algorithms, the optimization look may in many cases be unable to converge. It is noted that this issue also arises if one would take the $\mathcal{F}$-Score as optimization criterion. A solution is to approximate the prevalence rates using a multiplication of predicted probabilities.

For a given target correctness $T$, a model $\hat{p}$ and a sample $y = \{y_1, ..., y_n\}$, let $\tilde{y}$ be a stochastic guessing with $\tilde{y} = \hat{p}$ being a natural first guess. The following approximation of the prevalence rates (respectively, true 1, true 0, false 1, and false 0) is defined:

$$\mathbb{T}1 = \frac{1}{n}\sum_{i=1}^{n} \tilde{y}_i y_i.$$

$$\mathbb{T}0 = \frac{1}{n}\sum_{i=1}^{n} (1 - \tilde{y}_i)(1 - y_i).$$

$$\mathbb{F}1 = \frac{1}{n}\sum_{i=1}^{n} \tilde{y}_i(1 - y_i).$$

$$\mathbb{F}0 = \frac{1}{n}\sum_{i=1}^{n} (1 - \tilde{y}_i)y_i.$$

This approach provides a simple approximation of prevalences. However, if $\tilde{y} = \hat{p}$, this approach falls short due to the oversight regarding the target variable. Hence, an improvement may be to define $\tilde{y} = S(\hat{p})$ by mapping

$$S\colon [0, T) \to [0, 0.5) \text{ and } S\colon (T, 1] \to (0.5, 1]$$

As is known in the art, there are uncountable methods for accomplishing such a mapping, even with the following properties: $S$ should be differentiable with a derivative greater than zero almost everywhere and $S(0) = 0$ and $S(1) = 1$. There is also a·trade-off regarding the 5-function choice. If the function closely resembles a step function, the function becomes impractical due to a lack of derivatives, especially at the extremes. Conversely, if a function resembles a linear function too closely, the V-Score can be distorted significantly, making the stochastic approximation ineffective. Some further definitions are relevant, when applying the S-function to the V-Score, namely:

$$p_0 = \mathbb{T}1 + \mathbb{F}0, \quad \bar{p}_{\hat{p},T} = p_0 + \mathbb{T}0, \quad r_{\hat{p},T} = \mathbb{T}0 + \mathbb{F}0.$$

Hence, with this approach, the V-Score for training a behavioural model can be calculated. It has been determined that a neural network based behavioural model trained on the V-Score as explained above has a significantly better performance in terms of the required characteristics, e.g., for hitting the target accuracy with minimal refreshed entries.

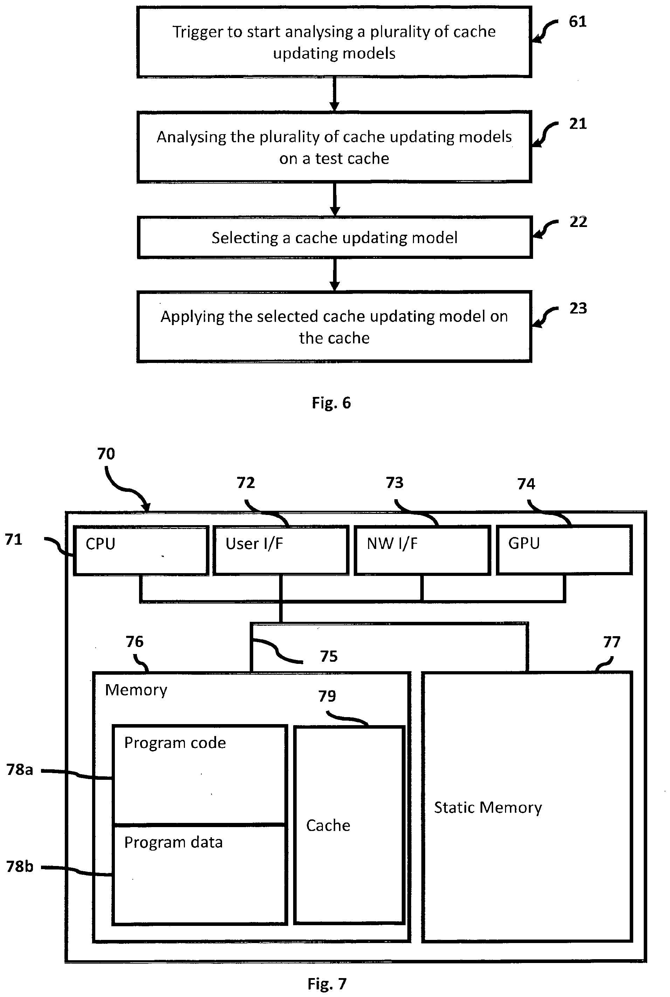

Fig. 6 is a flow chart according to another embodiment of the disclosure, in which the methods as described herein are started by a trigger (box 61) to start analysing the plurality of cache updating models 12. The boxes 21 to 23 are the same as in Fig. 2 and can generally be enhanced with all examples given in this disclosure, e.g., those explained in detail with respect to Figs. 1 to 5.

In some examples, the trigger may be generated by a user via a graphics user interface. The selection of the cache updating model 18 may, in some examples, then also be supported by the graphics user interface. This means, the trigger may be effectuated by the user 16, which indicates that a plurality of cache updating models 12 should be analysed in order to determine the best candidate for application on the cache 11. For example, this may be done by the user 16 if the cache 11 is to be implemented for the first time, if the evaluation metric 15 is too low for the currently applied cache updating model, if the accuracy of the prediction of the cache update model is not above a threshold, if the computational costs for executing the method are currently enough, if a time since last execution of the method is above a threshold, or a combination of those criteria. The trigger may also be automatic, i.e., the user 16 may not be involved and a (re-)start of the method may be based on at least one of the criteria stated right above for the manual trigger.

Fig. 7 is a diagrammatic representation of internal components of a computing system 70 implementing the methods and/or the functionality of one or more of the components as described herein. The computing system 70 includes at least one processor 71, a user interface 72, a network interface 73 and a main memory 76, that communicate with each other via a bus 75. Optionally, the computing system 70 may further include a static memory 77 and a disk-drive unit (not shown) that also communicate with each via the bus 75. A video display, an alpha-numeric input device and a cursor control device may be provided as examples of user interface 72. Furthermore, the computing system 70 may also comprise one or more graphics processing units (GPU) 74.

The GPUs 74 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. GPUs can perform multiple simultaneous computations, thereby enabling the distributing of training processes and speeding up machine learning operations.

The main memory 76 may be a random-access memory (RAM) and/or any further volatile memory. The main memory 76 may store program code 78a and may also store additional program data 78b required for providing the functionalities described herein. Moreover, the main memory 76 may also include a cache 79 for caching instructions or temporary data needed for execution of the methods described herein.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description, or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

**Claims**

1. A method of controlling an update strategy of a cache comprising:

   - analysing a plurality of cache updating models applied on data entries of a test cache, wherein outdating probabilities of data entries of the test cache correspond to outdating probabilities of data entries of the cache, wherein analysing the plurality of cache updating models comprises:

- determining a value of an evaluation metric for a cache updating model of the plurality of cache updating models, wherein the evaluation metric is based on a target accuracy configurable by a user;

- selecting a cache updating model based on the value of the evaluation metric of the cache updating model; and
- applying the cache updating model on the cache.

2. The method of claim 1, wherein the evaluation metric is further based on an achieved accuracy in the test cache and on a number of refreshed data entries in view of the target accuracy after applying a cache updating model of the plurality of cache updating models.

3. The method of claim 1 or claim 2, wherein the evaluation metric is defined by

$$V_{\beta,T}(\hat{p}) = (1 - |\beta|) \max[\min[V_T(\hat{p}), 1], 0] + \max[\beta \epsilon_T(\hat{p}), -\beta \delta_T(\hat{p})]$$

with

$$\hat{P} = \begin{bmatrix} \hat{P}_1 \\ \hat{P}_2 \end{bmatrix},$$

$$V_T(\hat{p}) = 1 - \frac{Tp_0 - p_0\hat{P}_1 + p_0 + \hat{P}_1 - \hat{P}_2}{p_0(T - p_0)},$$

$$\epsilon_T(\hat{p}) = 1 - \max\left(0, \frac{T - \hat{P}_2}{T - p_0}\right),$$

$$\delta_T(\hat{p}) = 1 - \max\left(0, \frac{\hat{P}_1 - T + p_0}{1 - T + p_0}\right),$$

$$\beta \in [-1, 1],$$

wherein T is the target accuracy, wherein $\hat{P}$ is a result generated by cache updating model $\hat{p}$ and $\hat{P}_1$ represents a proportion of refreshed entries by model $\hat{p}$ in a considered cache, $\hat{P}_2$ a proportion of correctness in the considered cache after refreshing by cache updating model $\hat{p}$, and $p_0$ a proportion of correctness in the considered cache before refreshing by cache updating model $\hat{p}$, wherein $\epsilon_T$ reflects a missing-correctness rate in the considered cache after refreshing by cache updating model $\hat{p}$ and $\delta_T(\hat{p})$ an over-refreshing rate in the considered cache after refreshing by cache updating model p.

4. The method of claim 3, wherein $\beta$ is a parameter selectable by a user to control whether correctness rate or refreshing rate is more important when updating the cache.

5. The method of any one of the preceding claims, wherein selecting the cache updating model comprises selecting the cache updating model of the plurality of cache updating models that requires a minimum number of refreshed data entries for achieving the target accuracy.

6. The method of any one of the preceding claims further comprising:

- optimizing at least a part of the plurality of cache updating models based on the evaluation metric.

7. The method of claim 6, wherein optimizing at least a part of the plurality of cache updating models comprises applying a genetic search for optimizing hyperparameters of a respective cache updating model in view of a corresponding value of the evaluation metric.

8. The method of claim 6 or claim 7, wherein optimizing at least a part of the plurality of cache updating models comprises training a neural network cache updating model to optimize a value of the evaluation metric.

9. The method of any one of the preceding claims, wherein the selected cache updating model is applied to the cache in response to that the difference between the target accuracy and a predicted proportion of correctness in the cache is above a threshold.

10. The method of claim 9, wherein the selected cache updating model is applied if computational resources are sufficient for retrieving updated data entries for the cache.

11. The method of any one of the preceding claims, wherein the method is executed in response to a trigger to re-evaluate and select a cache updating model for the cache.

12. The method of claim 11, wherein the trigger is generated by a user via a graphics user interface and wherein the selection of the cache updating model is supported by the graphics user interface.

13. The method of claim 11, wherein the trigger is generated automatically based on at least one of the evaluation metric, an accuracy of the prediction of the cache update model currently applied, computational costs for executing the method, and a time since last execution of the method.

14. A computing system of controlling an update strategy of a cache, wherein the computing system is configured to execute the method of any one of claims 1 to 13.

15. A computer program comprising instructions which, when the program is executed by a computer, cause the computer to carry out the method of any one of claims 1 to 13.

**Fig. 1**

| Analysing a plurality of cache updating models on a test cache by determining a value of an evaluation metric for a cache updating model of a plurality of cache updating models | 21 |

| Selecting a cache updating model based on the value of the evaluation metric | 22 |

| Applying the selected cache updating model on the cache | 23 |

**Fig. 2**

Fig. 3A

Fig. 3B

**Fig. 4**

**Fig. 5**

Trigger to start analysing a plurality of cache updating models — 61

Analysing the plurality of cache updating models on a test cache — 21

Selecting a cache updating model — 22

Applying the selected cache updating model on the cache — 23

**Fig. 6**

**Fig. 7**

Europäisches
Patentamt

European
Patent Office

Office européen
des brevets

# EUROPEAN SEARCH REPORT

**Application Number**

EP 24 31 5477

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/406145 A1 (KELLEY JOHN [US] ET AL) 30 December 2021 (2021-12-30) | 1,2,5,6, 9-15 | INV. G06F12/0893 |
| Y | * paragraph [0021] - paragraph [0033]; | 7,8 | |
| A | claims 7,8; figures 1-11 * * paragraph [0050] - paragraph [0068] * ----- | 3,4 | |
| Y | Amouzegar Morteza ET AL: "Genetic Cache: A Machine Learning Approach to Designing DRAM Cache Controllers in HBM Systems", , 31 August 2024 (2024-08-31), XP093263918, DOI: https://dl.acm.org/doi/10.1145/3676966 Retrieved from the Internet: URL:https://dl.acm.org/doi/10.1145/3676966 [retrieved on 2025-03-26] * page 8 - page 11 * ----- | 7,8 | |
| A | BISCHL BERND ET AL: "Hyperparameter optimization: Foundations, algorithms, best practices, and open challenges", WILEY INTERDISCIPLINARY REVIEWS: DATA MINING AND KNOWLEDGE DISCOVERY, vol. 13, no. 2, 1 March 2023 (2023-03-01), pages e1484-n/a, XP093263913, Hoboken, USA ISSN: 1942-4787, DOI: 10.1002/widm.1484 * page 1 - page 2 * ----- | 1-15 | TECHNICAL FIELDS SEARCHED (IPC) G06F |
| A | US 11 210 234 B2 (ADVANCED MICRO DEVICES INC [US]) 28 December 2021 (2021-12-28) * column 1, line 60 - column 2, line 61 * ----- | 1-15 | |

The present search report has been drawn up for all claims

| Place of search | Date of completion of the search | Examiner |
|---|---|---|
| The Hague | 26 March 2025 | Toader, Elena Lidia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5477

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2025

| Patent document cited in search report | | Publication date | Patent family member(s) | | Publication date |
|---|---|---|---|---|---|
| US 2021406145 | A1 | 30-12-2021 | CN | 115735198 A | 03-03-2023 |
| | | | EP | 4172789 A1 | 03-05-2023 |
| | | | JP | 2023532647 A | 31-07-2023 |
| | | | KR | 20230026413 A | 24-02-2023 |
| | | | US | 2021406145 A1 | 30-12-2021 |
| | | | WO | 2021262354 A1 | 30-12-2021 |
| US 11210234 | B2 | 28-12-2021 | CN | 114631082 A | 14-06-2022 |
| | | | EP | 4052133 A1 | 07-09-2022 |
| | | | JP | 7453360 B2 | 19-03-2024 |
| | | | JP | 2023500590 A | 10-01-2023 |
| | | | KR | 20220087459 A | 24-06-2022 |
| | | | US | 2021133114 A1 | 06-05-2021 |
| | | | US | 2022121579 A1 | 21-04-2022 |
| | | | WO | 2021087115 A1 | 06-05-2021 |

EPO FORM P0459

For more details about this annex : see Official Journal of the European Patent Office, No. 12/82